# EUROPÄISCHE PATENTANMELDUNG

(11) **EP 1 928 072 A2**
(43) Veröffentlichungstag der Anmeldung: **04.06.2008**
(21) Anmeldenummer: 07121964.6
(22) Anmeldetag: 30.11.2007
(51) Int. Cl.: H02K 1/04, H02K 1/06

(54) **Einfassung für Aktivteile, insbesondere Läufer- oder Statorring, für eine elektrische Maschine, insbesondere Transversalflussmaschine**

(30) Priorität: 30.11.2006 DE 102006056942
(71) Anmelder: Lloyd Dynamowerke GmbH & Co. KG, 28207 Bremen (DE)
(72) Erfinder: Götschmann, Dr. Norbert, 28195 Bremen (DE); Hüneberg, Wilhelm, 28325 Bremen (DE)
(74) Vertreter: von Ahsen, Erwin-Detlef

(57) **Zusammenfassung**

Die Erfindung betrifft eine Einfassung für Aktivteile, insbesondere Läufer- oder Statorring für eine elektrische Maschine, insbesondere Transversalflussmaschine, mit einem Ringsegment (11; 15, 16; 21, 22; 27; 32) aus Metall. Um eine Einfassungen für Aktivteile mit hoher Werkstoffsteifigkeit, geringer elektrischer Leitfähigkeit, hoher Wärmeleitfähigkeit, hoher Festigkeit und plastischem Werkstoffverhalten zu schaffen, ist die erfindungsgemäße Einfassung dadurch gekennzeichnet, dass das Ringsegment (11; 15, 16; 21, 22; 27; 32) an wenigstens einer Stelle mit einer elektrisch isolierenden Unterbrechung (12; 17, 18; 23, 24; 33) versehen ist.

## Beschreibung

Die Erfindung betrifft eine Einfassung für Aktivteile, insbesondere Läufer- oder Statorring, für eine elektrische Maschine, insbesondere Transversalflussmaschine, mit einem Ringsegment aus Metall.

Es ist bekannt, derartige Einfassungen für Aktivteile, wie zum Beispiel Läufer- oder Statorringe, nachfolgend verkürzt als Ring bezeichnet, als massiven Aluminiumring herzustellen. Solche Einfassungen weisen eine hohe Werkstoffsteifigkeit, hohe Wärmeleitfähigkeit zum Abführen von Verlustwärme, hohe Festigkeit und gute Zerspanbarkeit für die spanende Bearbeitung auf. Nachteilig bei zum Beispiel Aluminiumringen ist jedoch deren gute elektrische Leitfähigkeit. Aufgrund des wechselnden magnetischen Feldes einer Transversalflussmaschine treten in einem geschlossenen Metallring nämlich Ringströme und Wirbelströmverluste auf, wodurch sich ein unakzeptabel niedriger Wirkungsgrad einstellt.

Zur Vermeidung dieses Nachteils wurden Transversalflussmaschinen mit Ringen aus keramischem Werkstoff gebaut. Verlustströme sind bei diesen Maschinen ausgeschlossen, wodurch sich ein guter Wirkungsgrad ergibt. Allerdings lassen sich keramische Werkstoffe nicht plastisch verformen, so dass bei Überbeanspruchung kein Selbsthilfeeffekt eintritt. Hierdurch kommt es zu lokalen Spannungsspitzen, auch bedingt durch inhomogene thermische Dehnungen, und anderer lokaler Überbeanspruchungen zu Rissbildung im Bauteil und letztlich zum Bauteilversagen.

Ferner ist probiert worden, derartige Ringe aus Faserverbundwerkstoff herzustellen. Dabei wurden Fasern mit hohem Elastizitätsmodul in einer polymeren Matrix mit niedrigem Elastizitätsmodul verwendet. Derartige Faserverbundwerkstoffe erfüllen in der Regel die Anforderungen an eine geringe elektrische Leitfähigkeit, hohe Festigkeit und gute Zerspanbarkeit. Nachteilig ist hier jedoch die gute Wärmeisolationseigenschaft, das heißt, schlechte Wärmeleitfähigkeit, was die Abfuhr von Verlustwärme behindert. Darüber hinaus ist der Elastizitätsmodul von Faserverbundwerkstoffen niedriger als von metallischen Werkstoffen. Dies, verbunden mit den hohen Magnetkräften in Transversalflussmaschinen, führt zu elastischen Verformungen, die letztlich dazu führen, dass der Luftspalt nicht aufrechterhalten wird.

Hiervon ausgehend liegt der Erfindung das Problem zugrunde, Einfassungen für Aktivteile mit hoher Werkstoffsteifigkeit, geringer elektrischer Leitfähigkeit, hoher Wärmeleitfähigkeit, hoher Festigkeit und plastischem Werkstoffverhalten zu schaffen.

Zur Lösung dieses Problems ist die erfindungsgemäße Einfassung dadurch gekennzeichnet, dass das Ringsegment an wenigstens einer Stelle mit einer elektrisch isolierenden Unterbrechung versehen ist.

An sich ist eine metallische und damit elektrisch leitfähige Einfassung für Aktivteile vorgesehen, so dass hier Ringströme und Wirbelströme aufgrund der guten elektrischen Leitfähigkeit im alternierenden Magnetfeld der Maschine entstehen können. Durch die elektrisch isolierende Unterbrechung ist die an sich metallische Einfassung jedoch erfindungsgemäß an wenigstens einer Stelle unterbrochen, so dass sich keine Ringströme oder Wirbelströme ausbilden können. Durch die Unterbrechung sind auf überraschend einfache Weise alle Vorteile der metallischen Einfassungen, insbesondere aus Aluminium, mit den Vorteilen nicht elektrisch leitender Einfassungen verbunden.

Im einfachsten Fall ist die an sich metallische Einfassung an einer Stelle in Radialrichtung oder schräg zur Radialrichtung geschlitzt, wobei durch den Schlitz ein isolierender Luftspalt entsteht. Die Spaltdicke ist dabei auf die auftretenden Spannungen abzustimmen. Vorzugsweise wird die Einfassung aber an der Unterbrechung durch ein elektrisch nicht leitendes Material verbunden, insbesondere verklebt. Hierdurch ergibt sich eine höhere Isolationswirkung als durch einen Luftspalt. Darüber hinaus erhöht sich durch die Verbindung die Steifigkeit der Einfassung.

Die Einfassung kann auch aus zwei oder mehr Segmenten zusammengesetzt sein, wobei insbesondere eine zwei- oder mehrlagige Struktur (Sandwichbauweise) entsteht. Die Unterbrechungen sollten dabei zueinander versetzt sein, also nicht zueinander fluchten, was wiederum die Steifigkeit erhöht. Die Segmente selbst können in Radialrichtung ineinandergelegt sein. In diesem Fall sind also mehrere von innen nach außen größer werdende Ringe ineinandergelegt. Alternativ können die Segmente auch, in Axialrichtung gesehen, aufeinandergelegt sein. Als besonders günstig hat sich erwiesen, wenn Segmente in Form von Viertelkreisbögen verwendet werden. Hierdurch wird der Verschnitt beim Anfertigen der Segmente minimiert. Bei größeren Ringdurchmessern kann es aber auch angezeigt sein, Fünftelkreisbögen, Sechstelkreisbögen, usw. als Segmente zu verwenden. Schließlich ist es auch möglich, die Unterbrechung selbst spiralförmig auszubilden. In diesem Fall ist auch der eigentliche metallische Ring spiralförmig ausgebildet.

Wie die Einfassung konkret auch immer ausgebildet sein mag, ist es wichtig, dass kein geschlossener Kreis aus elektrisch leitendem Material gebildet wird.

Um die Passgenauigkeit und Stabilität des Ringes weiter zu verbesseren, können zusätzlich oder alternativ Stiftverbindungen zum Verbinden der Segmente vorgesehen sein. Diese sind dann ebenfalls aus nicht elektrisch leitendem, also isolierendem Material gebildet oder gegen die Segmente isoliert.

Ausführungsbeispiele der Erfindung werden nachfolgend anhand der Zeichnung näher erläutert. In der Zeichnung zeigen:
- Fig. 1: ein erstes Ausführungsbeispiel für einen Ring mit den Erfindungsmerkmalen in Draufsicht,
- Fig. 2: ein zweites Ausführungsbeispiel für einen Ring mit den Erfindungsmerkmalen in Draufsicht,
- Fig. 3: ein drittes Ausführungsbeispiel für einen Ring mit den Erfindungsmerkmalen in Draufsicht,
- Fig. 4: den Ring gemäß Fig. 3 in Seitenansicht,
- Fig. 5: ein viertes Ausführungsbeispiel für einen Ring mit den Erfindungsmerkmalen in Draufsicht,
- Fig. 6: eine Anordnung von Ringen mit den Erfindungsmerkmalen in perspektivischer Darstellung.

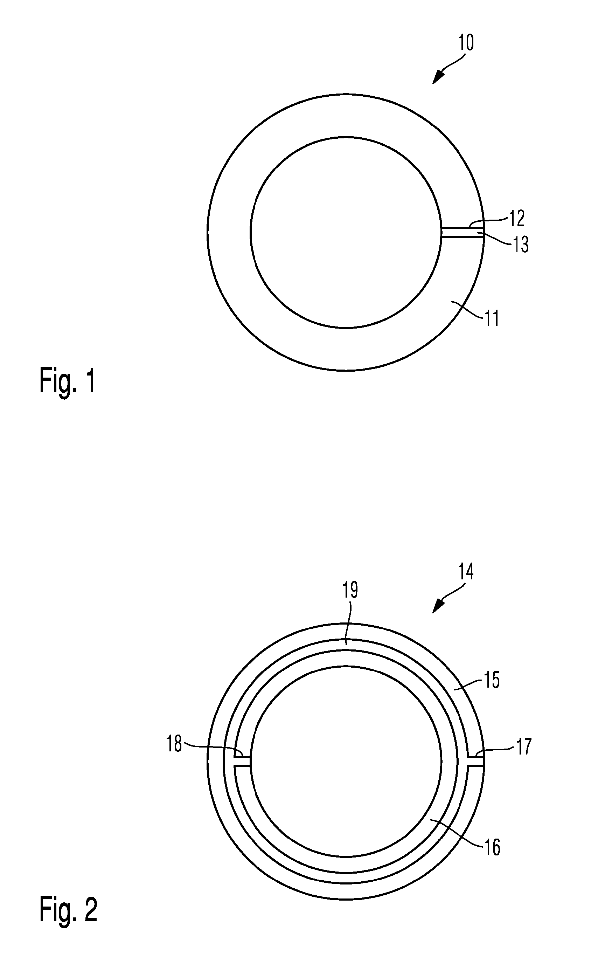

Fig. 1 zeigt den einfachst denkbaren Fall eines Läufer- oder Statorringes 10 mit den Erfindungsmerkmalen. Ein an sich aus Metall, nämlich Aluminium, gefertigter Ring ist an einer Stelle aufgeschnitten. Auf diese Weise entsteht ein Ringsegment 11 mit einer Unterbrechung 12. Diese Unterbrechung 12 ist mit einem elektrisch isolierenden Material 13 gefüllt, welches gleichzeitig die Enden des metallischen Ringsegments 11 an der Unterbrechung 12 miteinander verbindet, nämlich verklebt. Hierzu können beispielsweise die aus der Fertigung elektrischer Maschinen bekannten Harze verwendet werden.

Bei dem Läufer- oder Statorring 14 nach Fig. 2 sind zwei Ringsegmente 15, 16 aus Metall, nämlich Aluminium, vorgesehen, welche so bemessen sind, dass sie ineinandergelegt werden können. Beide Ringsegmente 15, 16 sind jeweils mit einer Unterbrechung 17, 18 versehen. Die Ringsegmente 15 und 16 werden, wie in Fig. 2 gezeigt, ineinandergelegt, wobei die Unterbrechungen 17, 18 zueinander versetzt angeordnet werden, also nicht zueinander fluchten sollten. Im vorliegenden Fall sind die Unterbrechungen 17, 18 einander diametral gegenüberliegend angeordnet. Die Unterbrechungen 17, 18 und auch ein Spalt 19 zwischen den Ringen 15, 16 werden wieder mit einem elektrisch nicht leitenden, also isolierenden, Material verfüllt.

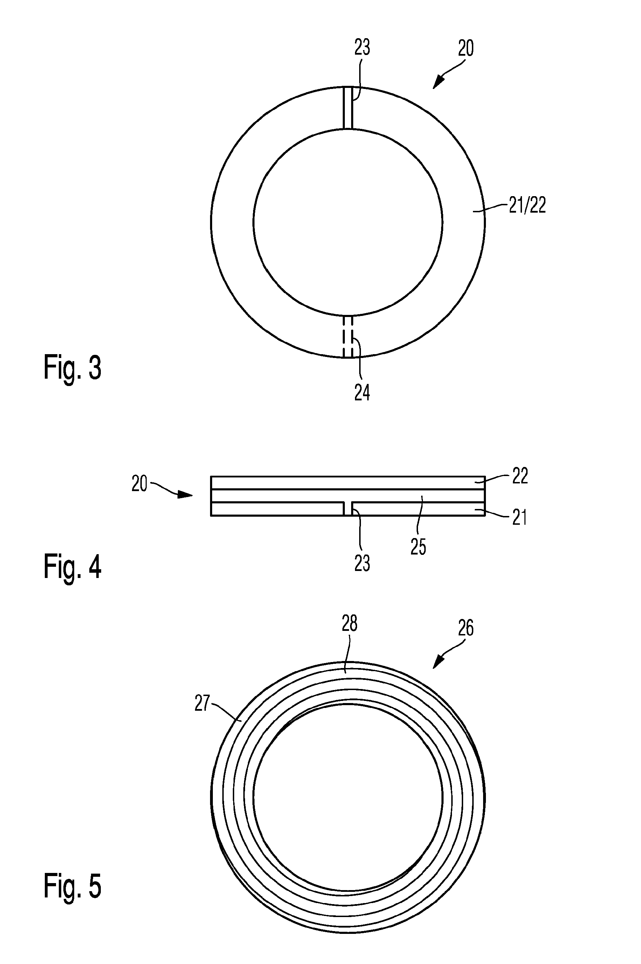

Bei dem Ausführungsbeispiel gemäß Fig. 3 und 4 ist ein Läufer- oder Statorring 20 durch Aufeinanderlegen von zwei ansonsten gleichen Ringsegmenten 21, 22 aus Metall, nämlich Aluminium, gebildet. Die Ringsegmente 21, 22 sind wiederum mit Unterbrechungen 23, 24 versehen. Die Ringsegmente 21, 22 werden bei der Fertigung wieder so aufeinandergelegt, dass die Unterbrechungen 23, 24 versetzt zueinander, also nicht fluchtend zueinander, angeordnet sind. Konkret sind die Unterbrechungen 23, 24 wieder diametral einander gegenüberliegend angeordnet. Die Unterbrechungen 23, 24 und auch ein Spalt 25 zwischen den Ringen 21, 22 sind wiederum mit einem elektrisch nicht leitenden, also isolierenden, Material verfüllt und verbindet die Ringe 21, 22 miteinander.

Selbstverständlich können bei den Ausführungsbeispielen gemäß Fig. 2 bzw. 3 und 4 auch mehr als zwei Ringsegmente verwendet werden, so dass ein Läufer- oder Statorring mit entsprechend mehr Lagen entsteht. Ferner können je Lage zwei oder mehr Unterbrechungen vorgesehen sein, so dass entsprechend kürzere Ringsegmente entstehen.

Bei dem Ausführungsbeispiel gemäß Fig. 5 ist der Läufer- oder Statorring 26 so gebildet, dass ein Strang aus Metall, nämlich Aluminium, zu einer Spirale 27 gewickelt ist, wobei die Anzahl der Windungen je nach Dicke des Strangs und Dicke des Läufer- oder Statorringes 26 bemessen wird. Es liegt also ein zu der Spirale 27 gewickeltes Ringsegment vor, wobei auch wieder zwei oder mehr Spiralen vorgesehen sein können (mehrgängige Spirale). Die Spirale 27 ist so gebildet, dass zwischen den einzelnen Windungen wiederum ein Spalt 28 entsteht, welcher mit einem isolierenden Material verfüllt ist, welches die einzelnen Windungen der Spirale 27 gleichzeitig miteinander verklebt.

Bei dem Ausführungsbeispiel gemäß Fig. 5 ist die Spirale 27 so gebildet, dass die einzelnen Windungen, in Radialrichtung gesehen, ineinanderliegen. Aber auch hier ist es analog dem Ausführungsbeispiel gemäß Fig. 3 und 4 möglich, die Spirale 27 so zu winden, dass die einzelnen Windungen, in Axialrichtung gesehen, hintereinander angeordnet sind, ähnlich einer Schraubenfeder.

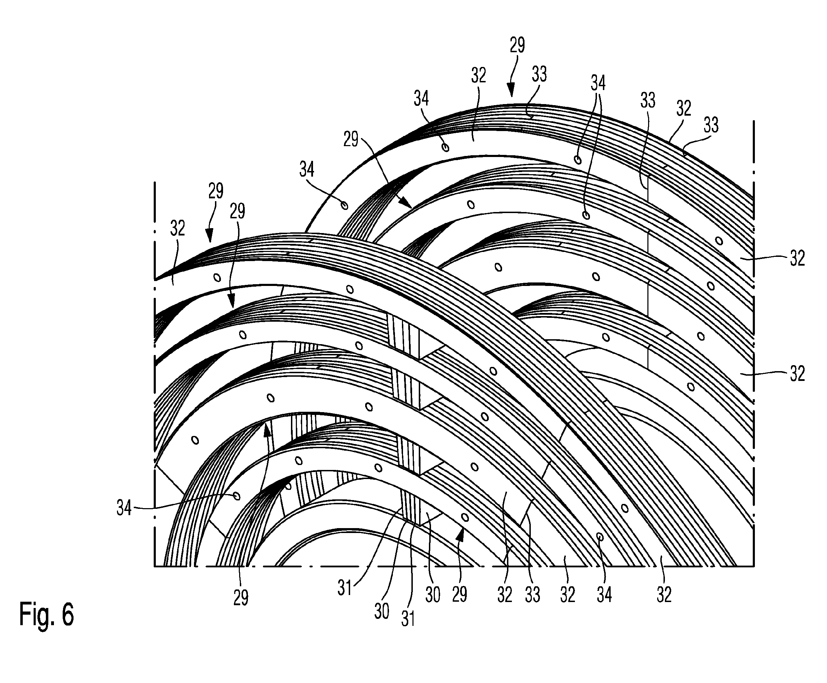

In Fig. 6 ist eine Statoranordnung mit einem weiteren Ausführungsbeispiel erfindungsgemäßer Läufer- oder Statorringen 29 gezeigt, wobei mehrere Läufer- oder Statorringe 29, in Radialrichtung gesehen, ineinandergelegt sind. Wie in Fig. 6 angedeutet, ist der Zwischenraum zwischen zwei benachbarten Läufer- oder Statorringen mit Permanentmagneten 30 versehen, die untereinander durch Distanzstücke 31 getrennt sind, wie dieses bei Transversalflussmaschinen an sich bekannt ist.

Die Läufer- oder Statorringe 29 selbst sind aus mehreren Segmenten 32 aus Metall, konkret Aluminium, gebildet. Jedes Segment 32 ist als Viertelkreis ausgebildet. Diese Segmente 32 werden so miteinander verbunden, dass mehrere Lagen von Segmenten 32 entstehen und innerhalb jeder Lage die Segmente so angeordnet sind, dass Unterbrechungen 33 zwischen den Segmenten 32 innerhalb einer Lage nicht zueinander fluchten, also versetzt zueinander angeordnet sind. Hierdurch entstehende Spalte sowie zwischen den einzelnen Lagen angeordnete Spalte werden wiederum mit einem elektrisch isolierenden Material verfüllt, welches die Segmente 32 gleichzeitig miteinander verklebt. Um eine höhere Passgenauigkeit und auch eine höhere Festigkeit zu erreichen, sind die Segmente 32 zusätzlich mittels Verbindungsstiften 34 miteinander verbunden. Diese Verbindungsstifte 34 sind aus elektrisch nicht leitendem Material gebildet oder zumindest gegen die Segmente 32 isoliert.

Selbstverständlich können bei den übrigen Ausführungsbeispielen ebenfalls Verwendungsstifte verwendet werden. Ferner brauchen die Unterbrechungen nicht, wie gezeigt, radial gerichtet sein. Die können auch gegen die Radialrichtung geneigt sein, was die Klebefläche und damit die Festigkeit erhöht.

### Bezugszeichenliste:

- 10: Läufer- oder Statorring
- 11: Ringsegment
- 12: Unterbrechung
- 13: isolierendes Material
- 14: Läufer- oder Statorring
- 15: Ringsegment
- 16: Ringsegment
- 17: Unterbrechung
- 18: Unterbrechung
- 19: Spalt
- 20: Läufer- oder Statorring
- 21: Ringsegment
- 22: Ringsegment
- 23: Unterbrechung
- 24: Unterbrechung
- 25: Spalt
- 26: Läufer- oder Statorring
- 27: Spirale
- 28: Spalt
- 29: Läufer- oder Statorring
- 30: Magnet
- 31: Distanzstück
- 32: Segment
- 33: Unterbrechung
- 34: Verbindungsstift

## Patentansprüche

1. Einfassung für Aktivteile, insbesondere Läufer- oder Statorring für eine elektrische Maschine, insbesondere Transversalflussmaschine, mit einem Ringsegment (11; 15, 16; 21, 22; 27; 32) aus Metall, **dadurch gekennzeichnet , dass** das Ringsegment (11; 15, 16; 21, 22; 27; 32) an wenigstens einer Stelle mit einer elektrisch isolierenden Unterbrechung (12; 17, 18; 23, 24; 33) versehen ist.

2. Einfassung nach Anspruch 1, **dadurch gekennzeichnet, daß** die Enden des Ringsegmentes (11; 15, 16; 21, 22; 27; 32) an der Unterbrechung (12; 17, 18; 23, 24; 33) ein elektrisch nicht leitendes Material miteinander verbunden, insbesondere verklebt, sind.

3. Einfassung nach Anspruch 1 oder 2, **dadurch gekennzeichnet, dass** der Ring aus zwei oder mehr Segmenten zusammengesetzt ist, insbesondere in zwei oder mehr Lagen mit zueinander versetzt angeordneten Unterbrechungen (33).

4. Einfassung nach Anspruch 3, **dadurch gekennzeichnet, dass** die Segmente (11; 15, 16; 21, 22; 27; 32) in Radialrichtung gesehen ineinandergelegt sind.

5. Einfassung nach Anspruch 3, **dadurch gekennzeichnet, dass** die Segmente (11; 15, 16; 21, 22; 27; 32) in Axialrichtung gesehen aufeinandergelegt sind.

6. Einfassung nach einem der Ansprüche 1 bis 5, **dadurch gekennzeichnet, dass** das Ringsegment (11; 15, 16; 21, 22; 27; 32) durch eine Spirale (27) gebildet ist.

7. Einfassung nach einem der Ansprüche 1 bis 6, **dadurch gekennzeichnet, dass** die Segmente (11; 15, 16; 21, 22; 27; 32) eine Stiftverbindung (34) vorgesehen ist.

8. Einfassung nach einem der Ansprüche 1 bis 7, **dadurch gekennzeichnet, dass** das Ringsegment (11; 15, 16; 21, 22; 27; 32) aus nichtmagnetischem Metall ist.
